# EUROPEAN PATENT APPLICATION

(11) **EP 1 534 008 A1**
(43) Date of publication of application: **25.05.2005**
(21) Application number: 04257027.5
(22) Date of filing: 12.11.2004
(51) Int. Cl.: H04N 7/01, H04N 5/44

(54) **Real time video data stream processor**

(30) Priority: 19.11.2003 US 707074
(71) Applicant: Genesis Microchip, Inc., Alviso, CA 95002 (US)
(72) Inventor: Swartz, Peter Dean, San Jose, CA 95120 (US); Dandapani, Ramesh, Cupertino, CA 95014 (US); Dong, Xu, San Jose, CA 95135 (US)
(74) Representative: Alton, Andrew

(57) **Abstract**

A configurable real time data processor arranged to provide a data stream to a display unit having an associated set of display attributes. A number of ports each of which is configured to receive an input data stream, an adaptive image converter unit coupled to at least one of the ports suitable for converting a corresponding input data stream to a corresponding converted data stream having associated converted data stream attributes, an image compositor unit arranged to combine the converted data streams to form a composited data stream, an image enhancer unit arranged to enhance the composited data stream to form an enhanced data stream, and a display unit interface arranged process the enhanced data stream suitable for display on the display unit.

## Description

The invention relates generally to real-time image processing systems. More particularly, methods and apparatus for efficiently processing multi-format video streams including those derived from bi-directional, packetized, non-point to point data communications networks into a single format video stream suitable for display on a selected display device.

Display devices generally include a display screen including a number of horizontal lines. The number of horizontal and vertical lines defines the resolution of the corresponding digital display device. Resolutions of typical screens available in the market place include 640 x 480, 1024 x 768 etc. In order to display a source image on a display screen, each source image is transmitted as a sequence of frames each of which includes a number of horizontal scan lines. Typically, a time reference signal, or signals, is provided in order to divide the analog signal into horizontal scan lines and frames. In the VGA/SVGA environments, for example, the reference signals include a VSYNC signal and an HSYNC signal where the VSYNC signal indicates the beginning of a frame and the HSYNC signal indicates the beginning of a next source scan line. Therefore, in order to display a source image, the source image is divided into a number of points and each point is displayed on a pixel in such a way that point can be represented as a pixel data element. Display signals for each pixel on the display may be generated using the corresponding display data element.

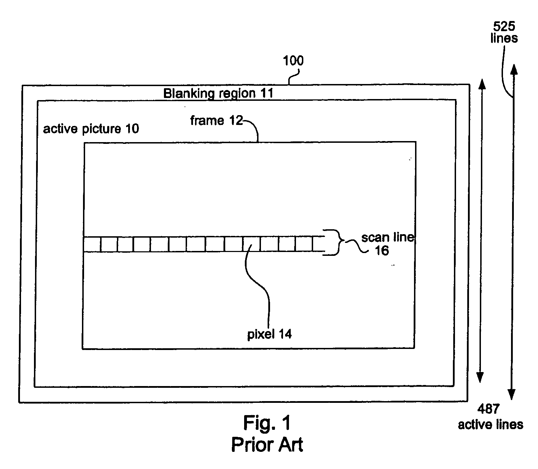

For example, Fig. 1 illustrates a conventional NTSC standard TV displayed image 100. The image 100 is formed of an active picture 10 that is the area of the image 100 that carries image information. Outside of the active picture 10 is a blanking region 11 suitable for line and field blanking. The active picture 10 uses frames 12, pixels 14 and scan lines 16 to form the actual TV image. The frame 12 represents a still image produced from any of a variety of sources such as an analog video camera, an analog television, etc.

Information in frame 12 is represented by any number of pixels 14. A pixel (an acronym for "picture element") is the smallest distinguishable and resolvable area in an image as well as the discrete location of an individual photo-sensor in a solid state camera. Each pixel in turn represents digitized information and is often represented by 8 bits, although each pixel may he represented by any number of bits. Each scan line 16 includes any number of pixels 14, thereby representing a horizontal line of information within frame 12. In NTSC video (a television standard using interlaced scan), for example, a field of information appears every 60th of a second, a frame (including 2 fields) appears every 30th of a second and the continuous presentation of frames of information produce a picture. On a computer monitor using progressive scan, a frame of information is periodically refreshed on the screen to produce the display seen by a user.

The number of frames-per-second (fps) is also an essential factor in the perception of a moving image. Films are shot at 24 Fps and usually displayed at movie theaters repeating each frame two times for a net 48 fps to avoid flickering. NTSC television uses 60 interlaced fields (fps) per second and PAL uses 50 fps. The interlaced fields are displaced one vertical line and happen at two different instances in time, they are called even field and odd field alternatively. The 60 fps can be perceived as a single complete frame every 30^{th} of a second whereas film is scanned progressively as a complete frame. Most internet media today uses 15 fps and useable moving images can have a 10 Fps frame rate.

In order to display these various video formats in a single display, the various video streams must be processed into a single video stream having video format consistent with a display device, such as a monitor or TV, on which the images are to be displayed. This is particularly important when attempting to display images from such disparate sources as an NTSC TV source (which is continuous in nature) at 60 fps interlaced or 30 fps progressive and internet media (which is packet based) at 15 fps or even lower. Additionally, it would be advantageous to integrate the requisite video processing into the display itself in order to provide a cost effective solution.

Therefore what is desired is an efficient method and apparatus for processing any of a number of multi-format data streams (including video data and network data) into a single format data stream suitable for display on a monitor.

According to the present invention, methods, apparatus, and systems are disclosed for processing a number of multi-format video data streams into a single synchronized display video a stream.

A configurable real time data processor arranged to provide a data stream to a display unit having an associated set of display attributes. A number of ports each of which is configured to receive an input data stream, a number of adaptive image converter units each of which are coupled to a corresponding one of the ports suitable for converting a corresponding input data stream to a corresponding converted data stream having associated converted data stream attributes, an image compositor unit arranged to combine the converted data streams to form a composited data stream, an image enhancer unit arranged to enhance the composited data stream to form an enhanced data stream, and a display unit interface arranged process the enhanced data stream suitable for display on the display unit.

A method of adaptively providing a data stream to a display unit having an associated set of display attributes. Receiving a number of input data streams at a number of corresponding input ports, converting the input data streams to a corresponding converted data stream having associated converted data stream attributes, compositing the converted data streams by an image compositor, enhancing the composited data stream, and processing the enhanced data stream for display on the display unit.

Computer program product for adaptively providing a data stream to a display unit having an associated set of display attributes computer code for receiving a number of input data streams at a number of corresponding input ports, computer code for converting the input data streams to a corresponding converted data stream having associated converted data stream attributes, computer code for compositing the converted data streams by an image compositor, computer code for enhancing the composited data stream, computer code for processing the enhanced data stream for display on the display unit, and computer readable medium for storing the computer code.

The invention will be better understood by reference to the following description taken in conjunction with the accompanying drawings.
Fig. 1 illustrates a conventional NTSC standard TV picture.
Fig. 2 shows a representative embodiment of the invention implemented as a video processing circuit having a multi-format video receiver port, a user interface port, and a network interface.
Fig. 3 shows a flowchart detailing a process for concurrently processing a number of video data streams in accordance with an embodiment of the invention.
Fig. 4 illustrates a computer system employed to implement the invention.

Reference will now be made in detail to a particular embodiment of the invention an example of which is illustrated in the accompanying drawings. While the invention will be described in conjunction with the particular embodiment, it will be understood that it is not intended to limit the invention to the described embodiment. To the contrary, it is intended to cover alternatives, modifications, and equivalents as may be included within the spirit and scope of the invention as defined by the appended claims.

In one embodiment, an integrated video processor suitable for concurrently processing any of a number of video data streams having an associated video format for display on a selected video display unit at a selected video format is described. The video processor includes any of a number of input ports, that includes, but is not limited to, a multi-format video port, a user interface port, and a network interface. In the described embodiment, any of a number of multi-format video streams received by the multi-format video port are converted by way of a format converter unit to a progressive scan video format. Such formats include component, composite, serial digital, parallel digital, RGB, or consumer digital video. The digital video signal can be any number and type of well known digital formats such as, SMPTE 274M-1995 (1920 x 1080 resolution), SMPTE 296M-1997 (1280 x 720 resolution), as well as standard 480 progressive scan video. The outputs of the video format converter unit, the user interface port and the network interface are each supplied to a corresponding image converter unit that assures that each signal provided to an image compositor unit is the same format consistent with the display. It should be noted that in the case of interlaced input data, the format converter unit provides a de-interlacing function that converts an interlaced image to a non-interlaced image (i.e., progressive scan type image). In those situations, however, where an interlaced image is to be displayed, an interlacing unit described below is used to appropriately interlace the image.

The image compositor unit, in turn, combines each of the provided signals to a single video data stream suitable for display on the display unit. In the described embodiment, the single video data stream is input to a video enhancer unit arranged to provide selected enhancement algorithms to the video data stream. Such enhancements include edge correction, contrast enhancement, etc. The enhanced video signal is, in turn, provided to a display unit interface that includes a progressive bypass which bypasses an interlacer unit included therein in those cases where the display is configured to display a progressive scan type image.

In the described embodiment, the inventive processor is incorporated in a integrated circuit or other such device in such a way as to enable the processor to be incorporated within the display without requiring a separate unit. In this way, a video receiver so equipped can directly receive and display in any selected format video data from any number and kind of video source such as satellite, cable, packetized network data, and the like.

The invention will now be described in terms of a real time input video data stream processing unit suitable for integration with a video display system. It should be noted, however, that the described embodiments are for illustrative purposes only and should not be construed as limiting either the scope or intent of the invention.

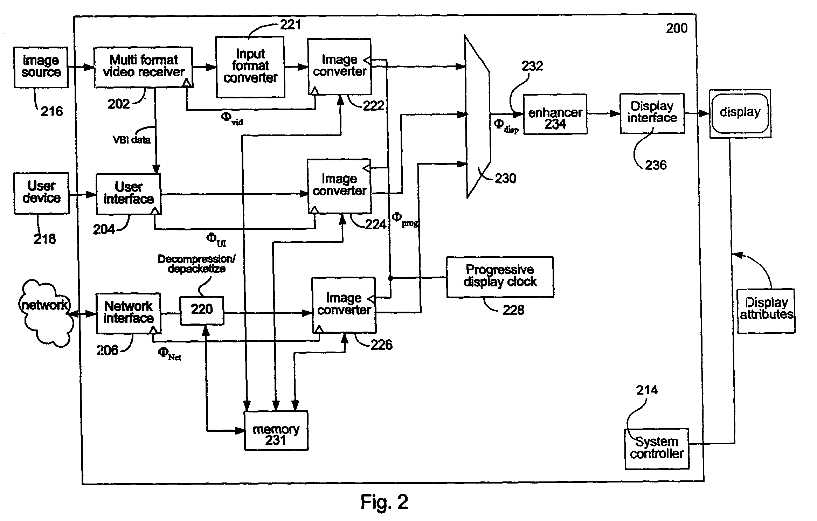

Accordingly, Fig. 2 shows a representative embodiment of the invention implemented as a video processing circuit 200 having a multi-format video receiver port 202, a user interface port 204, and a network interface port 206. In the described embodiment, the video processing circuit 200 is incorporated directly into a display device 208 having a display 210 suitable for displaying any images provided thereto in a particular video format. For example, in those cases where the display 210 is a CRT progressive scan type display, then only progressive scan type video signals can be displayed whereas in those cases where the display 210 is a conventional interlaced type display, then only interlaced type video signals are suitable to be displayed.

Therefore, in those cases where the video processing circuit 200 is directly incorporated into the display device 208 having a dedicated display unit, then the video processing unit 200 provides a video signals that are appropriate only for the dedicated display and no other. However, in those cases where the video processing circuit 200 is not directly incorporated into the display device 208 but is nonetheless capable of being coupled to the display device, the inventive circuit 200 can be used to process video signals for any of a number of different type displays each arranged to display video signals of a corresponding format. In these cases then the video processing circuit 200 is a configurable video processing circuit. In those cases where the video processing circuit 200 is configurable, the display unit 210 provides a set of display attributes 212 (such as color space, progressive vs interlaced, resolution, refresh rate, etc.) to a system controller unit 214. It should be noted that the display attributes can be described in terms of Extended Display Identification Data (EDID) that is a VESA standard data format that contains basic information about a monitor and its capabilities, including vendor information, maximum image size, color characteristics, factory pre-set timings, frequency range limits, and character strings for the monitor name and serial number. The system controller unit 214 uses the set of display attributes 212 to configure the various elements of the video processing circuit 200 in order to provide a video signal of the appropriate kind and format for display by the display 210. For example, when the display device 208 is a digital television, then the video signal is a digital video signal having any number and type of well known digital formats such as, SMPTE 274M-1995 (1920 x 1080 resolution, progressive or interlaced scan), SMPTE 296M-1997 (1280 x 720 resolution, progressive scan), as well as standard 480 progressive scan video and graphics.

An image source 216 coupled to the multi-format video port 202 provides any number of digital or analog image input signals for processing by the circuit 200. The image source 216 can provide a digital image stream that can take the form of a still image (having a format such as JPEG or TIFF) as well as video from, for example, a DVD player, set top box (with satellite DSS or cable signal) and the like. In this way, the image source 216 can provide any number and type of well-known digital formats, such as, JPEG, BMP, TIFF, BNC composite, serial digital, parallel digital, RGB, or consumer digital video.

As well known in the art, a television signal generally includes display data and corresponding synchronization signals. The display data usually represents color intensity for different points and the synchronization signals provide a time reference such that each point is associated with a point of an image. Synchronization signals typically include horizontal synchronization signals separating each line and vertical synchronization signals separating each frame. Each frame usually corresponds to an image and frames are encoded at 60 Hz in conventional television signals according to NTSC format known in the art.

In many instances digital data is encoded in television signals. For example, digital data is often encoded in the vertical blanking interval (VBI) of a television signal (VBI generally refers to the time duration or signal portion between frames). The VBI duration provides sufficient time for the scan electronics of a (CRT based) television system to move a scan position to point from the bottom end of a display screen to the top. The television signal corresponding to the VBI period typically does not contain any display data (or image data), and thus a television signal portion corresponding to the VBI period has been conveniently used to encode digital data.

Using the ability to encode digital data in a television system, broadcasters (or television signal generators, in general) may send data corresponding to several applications useful for viewers. For example, information is often encoded in the VBI to enable the display of selected text on television displays. Some companies broadcast television guide (indicating the program schedule) and some other companies provide stock quotes and news flashes using VBI portion of a television signal. Digital data can be encoded in television signal portions other than VBI also. For example, an entire channel of a television signal can be used to encode teletext data. Accordingly, the multi-format video receiver 202 includes a number of sub-circuits arranged singly or in combination to perform a number of functions that include, for example, a video decoder circuit, a digitization circuit, an MPEG decoder circuit, an RF decoder circuit and a VBI decoder circuit.

The user interface port 204 provides access to the circuit 200 for a user input device 218 that can take the form of a remote control device. As a remote control device, a user can invoke specific user supplied instructions (such as navigation control, volume, brightness, contrast, etc.) that are used, in turn, to control various aspects of the displayed image. In other situations, the user interface can enable closed captioning suitable for display of textual information to be incorporated into the display. Additionally, many user input devices provide navigation control signals used for navigating various on-screen displays (OSD) such as menus for DVDs, channel guides, and the like. In this way, the data provided by the user input device 218 is typically asynchronous in nature.

The network interface 206 provides a bi-directional link between network applications and data provided by a network (such as the Internet, intranets, LANs, WANs, etc.) and the inventive circuit 200. In most cases, the data provided by the network to the network interface 206 is packetized in nature along the lines of ATM data packets, Ethernet data packets, TCP/IP protocol type data packets and the like. In order, therefore, to integrate what is essentially discrete data packets consistent with that received by the network interface 206, the packetized data must be decompressed and depacketized by a depacketizer 220 included in or coupled to the network interface 206 and a memory unit 231.

It should be noted that each of the data streams from each of the ports has a clock associated with it. For example, in the case of the multi-format video receiver port 202, a video clock Φ_{vid}, in the case of the user interface, a user interface clock Φ_{UI}, and in the case of the network interface, a network clock Φₙₑₜ (for example, input video can interlaced and lower resolution (i.e. 720 x 480 I) whereas the network data could be progressive and higher resolution (i.e., 1024 x 768 P). In particular, in the video clock Φ_{vid} can represent the frame rate of any incoming video signal (such as 30 frames per second (fps) progressive or 60 fps interlaced) whereas the network clock video clock Φₙₑₜ can be 15 fps. For example, Φ_{vid} could be 60 Hz, Φₙₑₜ (such as from a PC) could be 72 Hz, whereas Φ_{UI} could be 75 Hz.

An input format converter unit 221 coupled to the output of the multi-format video receiver port 202 is configured to convert the incoming video data streams to a progressive scan type video format, if necessary. In those cases where the incoming data stream is already a progressive scan type format, the de-interlacing function is bypassed altogether. As part of the input format converter unit 221, a de-interlacer sub circuit provides for conversion of interlaced video data to progressive video data whereas in those cases where the input video data is already progressive video data, a progressive bypass circuit bypasses the interlacer.

A number of image converter blocks 222 through 226 are provided to convert input progressive scan data streams to a progressive output image size and timing based upon a progressive clock provided Φ_{prog} by a progressive display clock 228 that runs at the display rate of the display 210. In addition to converting the input video data streams, each of the image converter blocks interfaces with the memory unit 231 (or a memory controller unit if included therein). In this way, each of the image converter units can write the input video data directly to the memory unit 231 or provide processed image data into the memory unit 231. In the described embodiment, the image converter blocks include sub circuits taken singly on in combination that function as a horizontal scaler, a vertical scaler as well as a temporal scaler. The temporal scaler is arranged to provide frame rate conversion using various sub circuits taken singly or in combination to perform selected video processes such as any number and type of well known motion compensation techniques. For example, in the case of data provided by the user interface 218 that will be part of the displayed image, the associated image converter block 224 must provide at least a temporal scaler in order to match the displayed user input information to the frame rate of the displayed image.

In some cases, it would be advantageous to process any video data prior to the data being stored in the memory unit 231 such as in those cases when the video images are being downscaled. Therefore, by downscaling the video data prior to storing in the memory unit 231, substantial memory resources are conserved due to the reduced number of pixels and/or data per pixel required post processing. Such a situation is picture in picture (PIP) where a larger image is downscaled to a small PIP window.

In addition to storing video data in the memory unit 231, each of the image converter blocks has the ability to read video data from the memory unit 231 and processes the data accordingly. In either case, each of the image converter blocks can then be used to pass the video data read from the memory unit 231 to an image compositor unit as needed. If the frame rates are different, then frame rate conversion is performed by writing video data into the memory at a first frame rate and read out at a display rate. By providing memory resources to each of the image converter units, the output frame rates have the same clock which could be locked to any of the input video data streams (i.e., Φ_{vid}, Φᵤᵢ, or Φ_{prog}) or could be free running in that each data stream comes in at its own rate but is locked to a display rate or ration of rates that may be than any of the incoming rates.

An image compositor 230 requests video data from selected ones of the image converter blocks 222- 226. In the described embodiment, the image compositor 230 integrates all video signals provided thereto regardless of the source. Since all input video signals are now the same format and the same clock, the image compositor 230 forms an output video stream by combining each of the input video signals based upon a control signal provided by the system controller unit. The requested video data is then composited in such as way to form an output video data stream 232 that, in turn, is provided to a video enhancer unit 234 arranged to provide selective enhancement algorithms to the video data stream. Such enhancements include edge correction, contrast enhancement, sharpness control, color manipulation and control, brightness, either adaptively or under user control and described in more detail in issued U.S. patents 5940141, 5844617, 5237414, 5151783, 5014119, 4939576, and 4847681 each of which are incorporated by reference for all purposes. The enhanced video signal is, in turn, provided to a display unit interface 236 that includes a progressive bypass which bypasses an interlacer unit included therein in those cases where the display 210 is configured to display a progressive scan type image.

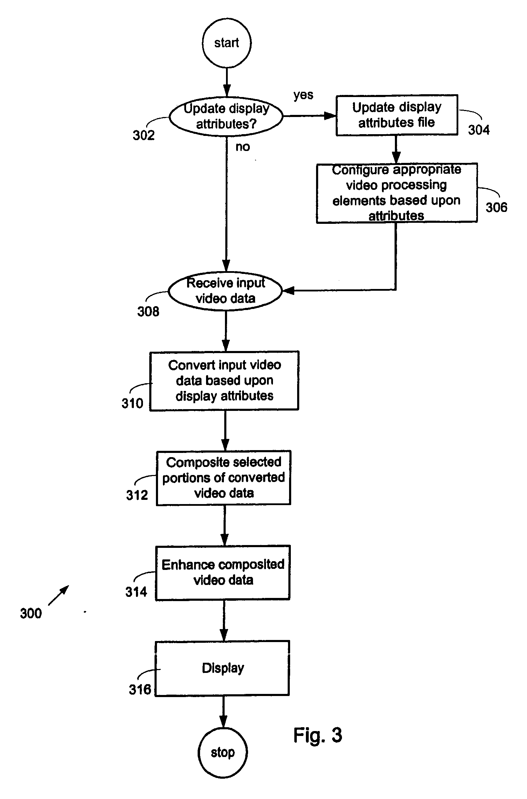

The invention will now be described in terms of a process 300 as illustrated by a flowchart shown in Fig. 3 that shows a flowchart detailing a process for concurrently processing a number of video data streams in accordance with an embodiment of the invention. Accordingly, the process 300 begins at 302 by a determination of whether or not a set of display attributes is to be updated. If it is determined that the set of display attributes is to be updated, then a set of display attributes are provided at 304 and, based upon the display attributes, appropriate video processing elements are configured at 306. In any case, at 308 input video data is received and at 310 the input video data is converted based upon the display attributes. At 312, an image compositor composites selected portions of the converted video data while at 314, the composited video data is selectively enhanced at 316. At 318, the enhanced video data is displayed on a display unit.

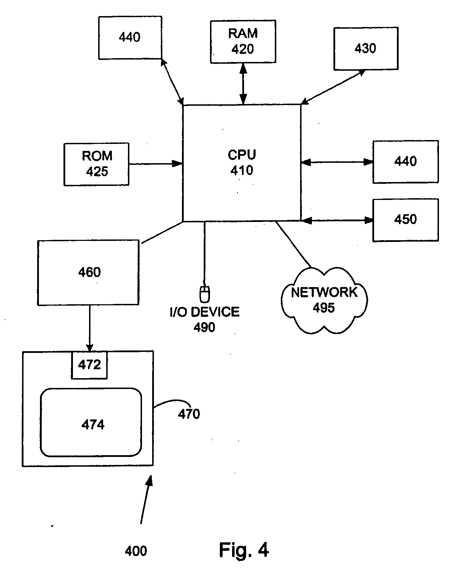

Fig. 4 illustrates a computer system 400 employed to implement the invention. Computer system 400 is only an example of a graphics system in which the present invention can be implemented. Computer system 400 includes central processing unit (CPU) 810, random access memory (RAM) 420, read only memory (ROM) 425, one or more peripherals 430, graphics controller 460, primary storage devices 440 and 450, and digital display unit 470. As is well known in the art, ROM acts to transfer data and instructions uni-directionally to the CPU 410, while RAM is used typically to transfer data and instructions in a bi-directional manner. CPU 410 may generally include any number of processors. Both primary storage devices 440 and 450 may include any suitable computer-readable media. A secondary storage medium 480, which is typically a mass memory device, is also coupled bi-directionally to CPU 410 and provides additional data storage capacity. The mass memory device 480 is a computer-readable medium that may be used to store programs including computer code, data, and the like. Typically, mass memory device 480 is a storage medium such as a hard disk or a tape which generally slower than primary storage devices 440, 450. Mass memory storage device 480 may take the form of a magnetic or paper tape reader or some other well-known device. It will be appreciated that the information retained within the mass memory device 480, may, in appropriate cases, be incorporated in standard fashion as part of RAM 420 as virtual memory.

Finally, CPU 410 optionally may be coupled to a computer or telecommunications network, e.g., an Internet network or an intranet network, using a network connection as shown generally at 495. With such a network connection, it is contemplated that the CPU 410 might receive information from the network, or might output information to the network in the course of performing the above-described method steps. Such information, which is often represented as a sequence of instructions to be executed using CPU 410, may be received from and outputted to the network, for example, in the form of a computer data signal embodied in a carrier wave. The above-described devices and materials will be familiar to those of skill in the computer hardware and software arts.

Graphics controller 460 generates analog image data and a corresponding reference signal, and provides both to digital display unit 470. The analog image data can be generated, for example, based on pixel data received from CPU 410 or from an external encode (not shown). In one embodiment, the analog image data is provided in RGB format and the reference signal includes the VSYNC and HSYNC signals well known in the art. However, it should be understood that the present invention can be implemented with analog image, data and/or reference signals in other formats. For example, analog image data can include video signal data also with a corresponding time reference signal.

Although only a few embodiments of the present invention have been described, it should be understood that the present invention may be embodied in many other specific forms without departing from the spirit or the scope of the present invention. The present examples are to be considered as illustrative and not restrictive, and the invention is not to be limited to the details given herein, but may be modified within the scope of the appended claims along with their full scope of equivalents.

While this invention has been described in terms of a preferred embodiment, there are alterations, permutations, and equivalents that fall within the scope of this invention. It should also be noted that there are may alternative ways of implementing both the process and apparatus of the present invention. It is therefore intended that the invention be interpreted as including all such alterations, permutations, and equivalents as fall within the true scope of the present invention.

## Claims

1. A configurable real time data processor arranged to provide a display data stream to a display unit having an associated set of display attributes, comprising:
a number of ports each of which is configured to receive an input data stream;
a format converter unit coupled to one of the ports arranged to convert a corresponding input data stream to a progressive type data stream, if needed;
a number of adaptive image converter units each coupled an associated one of the ports suitable for converting a corresponding input data stream to a corresponding converted data stream having associated converted data stream attributes;
an image compositor unit arranged to combine the converted data streams to form a composited data stream;
an image enhancer unit arranged to enhance the composited data stream to form an enhanced data stream;
a display unit interface arranged process the enhanced data stream to form the display data; and
a memory unit bi-directionally coupled to each of the image converter units and the image compositor arranged to store selected portions of selected ones of the data streams from the image converter units and to provide the selected portions to the image compositor as needed.

2. A configurable real time data processor as recited in claim 1, further comprising:
a progressive scan timing generator arranged to provide a progressive scan timing signal to the converter units such that the converted data streams are progressive scan type data streams.

3. A configurable real time data processor as recited in claim 1, further comprising:
a de-interlacing unit coupled to the format converter unit arranged to de-interlace an interlaced type video stream as needed.

4. A configurable real time data processor as recited in claim 2, wherein the converter unit further comprises:
a frame rate conversion unit arranged to synchronize each converted data stream to a display frame rate.

5. A configurable real time data processor as recited in claim 4, wherein the display frame rate is locked to a selected frame rate.

6. A configurable real time data processor as recited in claim 5, wherein the locked frame rate corresponds to one of the incoming data streams.

7. A configurable real time data processor as recited in claim 5, wherein the display frame rate is a free running frame rate.

8. A configurable real time data processor as recited in claim 1, wherein the ports include,
a video receiver port arranged to receive video data;
a user interface port arranged to receive user input commands; and
a network interface arranged bi-directionally connected to a network arranged to transceive packet based data to and from the network.

9. A configurable real time data processor as recited in claim 1, wherein the data processor is an integrated circuit.

10. A configurable data processor as recited in claim 1, wherein the display attributes are Extended Display Identification Data (EDID).

11. A configurable real time video processor as recited in claim 6, wherein the display interface further comprises:
an interlacer unit arranged to interlace a progressive scan image when the display unit is an interlaced type display unit; and
a progressive scan bypass unit arranged to bypass the interlacer when the display unit is a progressive scan type display unit.

12. A method of adaptively providing a data stream to a display unit having an associated set of display attributes, comprising;
receiving a number of input data streams at a number of corresponding input ports;
converting the input data streams to a corresponding converted data stream having associated converted data stream attributes;
compositing the converted data streams by an image compositor;
enhancing the composited data stream; and
processing the enhanced data stream for display on the display unit.

13. A method as recited in claim 12, further comprising:
providing a progressive scan timing signal such that the converted data streams are progressive scan type data streams.

14. A method as recited in claim 12, further comprising:
storing selected portions of selected ones of the data streams in a memory unit; and
providing the selected portions to the image compositor as needed.

15. A method as recited in claim 13, further comprising:
synchronizing each converted data stream to a display frame rate.

16. A method as recited in claim 15, further comprising:
locking the display frame rate to a selected frame rate.

17. A method as recited in claim 16, wherein the locked frame rate corresponds to one of the incoming data streams.

18. A method as recited in claim 15, wherein the display frame rate is a free running frame rate.

19. A method as recited in claim 12, wherein the ports include,
a video receiver port arranged to receive video data;
a user interface port arranged to receive user input commands; and
a network interface arranged bi-directionally connected to a network arranged to transceive packet based data to and from the network.

20. A method as recited in claim 12, wherein the data processor is an integrated circuit.

21. A method as recited in claim 12, wherein the display attributes are Extended Display Identification Data (EDID).

22. A method as recited in claim 21, further comprising:
interlacing a progressive scan video image when the display unit is an interlaced type display unit; and
bypassing the interlacing when the display unit is a progressive scan type display unit.

23. Computer program product for adaptively providing a data stream to a display unit having an associated set of display attributes, comprising:
computer code for receiving a number of input data streams at a number of corresponding input ports;
computer code for converting the input data streams to a corresponding converted data stream having associated converted data stream attributes;
computer code for compositing the converted data streams by an image compositor;
computer code for enhancing the composited data stream;
computer code for processing the enhanced data stream for display on the display unit; and
computer readable medium for storing the computer code.

24. Computer program product as recited in claim 23, further comprising:
computer code for providing a progressive scan timing signal such that the converted data streams are progressive scan type data streams.

25. Computer program product as recited in claim 23, further comprising:
computer code for storing selected portions of selected ones of the data streams in a memory unit; and
computer code for providing the selected portions to the image compositor as needed.

26. Computer program product as recited in claim 24, further comprising:
computer code for synchronizing each converted data stream to a display frame rate.

27. Computer program product as recited in claim 26, further comprising:
computer code for locking the display frame rate to a selected frame rate.

28. Computer program product as recited in claim 27, wherein the locked frame rate corresponds to one of the incoming data streams.

29. Computer program product as recited in claim 24, wherein the display frame rate is a free running frame rate.

30. Computer program product as recited in claim 23, wherein the ports include,
a video receiver port arranged to receive video data;
a user interface port arranged to receive user input commands; and
a network interface arranged bi-directionally connected to a network arranged to transceive packet based data to and from the network.

31. Computer program product as recited in claim 23, wherein the data processor is an integrated circuit.

32. Computer program product as recited in claim 23, wherein the display attributes are Extended Display Identification Data (EDID).

33. Computer program product as recited in claim 30, further comprising:
computer code for interlacing a progressive scan video image when the display unit is an interlaced type display unit; and
computer code for bypassing the interlacing when the display unit is a progressive scan type display unit.
